# EUROPÄISCHE PATENTSCHRIFT

(11) **EP 1 836 418 B1**
(45) Veröffentlichungstag und Bekanntmachung des Hinweises auf die Patenterteilung: **19.11.2008**
(21) Anmeldenummer: 06705768.7
(22) Anmeldetag: 11.01.2006
(51) Int. Cl.: F16H 61/22, F16H 59/10, B60R 25/00

(54) **SCHALTVORRICHTUNG FÜR EIN FAHRZEUGGETRIEBE**
SHIFTING DEVICE FOR A VEHICLE TRANSMISSION
DISPOSITIF DE SELECTION CONÇU POUR UNE BOITE DE VITESSES DE VEHICULE

(30) Priorität: 12.01.2005 DE 102005001589
(43) Veröffentlichungstag der Anmeldung: 26.09.2007
(73) Patentinhaber: ZF Friedrichshafen AG, 88038 Friedrichshafen (DE)
(72) Erfinder: GIEFER, Andreas, 49448 Lemförde (DE); MEYER, Jörg, 49419 Wagenfeld (DE)
(86) Internationale Anmeldenummer: PCT/DE2006/000029
(87) Internationale Veröffentlichungsnummer: WO 2006/074644

(56) Entgegenhaltungen:
- DE-A1- 19 913 005
- US-A- 5 775 166
- US-A1- 2002 077 217
- US-A1- 2004 226 801

## Beschreibung

Die Erfindung betrifft eine Schaltvorrichtung für ein Fahrzeuggetriebe eines Kraftfahrzeuges mit den im Oberbegriff des Patentanspruches 1 genannten Merkmalen.

Derartige Schaltvorrichtungen können mit Verriegelungsvorrichtungen versehen sein, die in Abhängigkeit von vorgegebenen Parametern, wie Motordrehzahl, Geschwindigkeit des Fahrzeuges, Stellung der Pedalerie, sowie weiteren denkbaren Fahrzeugparametern eine Veränderung der Wählhebelstellung ermöglichen oder sperren, und sind in unterschiedlicher Ausgestaltung aus dem Stand der Technik bekannt. Die Verriegelungsvorrichtungen können dabei als so genannte Schaltsperren ausgebildet sein, die entsprechend einer beispielhaften Realisierungsvariante in den hydraulischen Steuerkreis des Automatikgetriebes integriert sind und derart wirken, dass ein von den oben genannten Parametern abhängiges elektrisches Steuersignal ein Schaltventil beeinflusst, welches gegebenenfalls eine vom Fahrer beabsichtigte und über den Wählhebel eingeleitete Veränderung der Fahrstufe solange ignoriert, bis in Folge geeigneter Rahmenbedingungen eine Veränderung der Schaltstufe problemlos möglich ist.

Wesentlicher Nachteil hierbei ist die Tatsache, dass die Schaltsperre innerhalb des Automatikgetriebes wirksam wird, es dem Fahrer also möglich ist, den Wählhebel auch dann in eine Position zu stellen, wenn die Ausführung des damit vorgegebenen Befehls an sich unzulässig ist und somit auch von der Schaltsperre verhindert wird. In Folge der verzögerten Änderung der Fahrstufe können bei der Verwendung derartiger Schaltsperren in Extremfällen Beeinträchtigungen der Fahrsicherheit eintreten, falls die schließlich verspätet geschaltete Fahrstufe nicht mehr der gesamten Fahrsituation des Fahrzeuges angemessen ist.

Darüber hinaus existieren Schaltvorrichtungen, welche in unterschiedlicher Ausgestaltung Verriegelungsvorrichtungen enthalten, die mittels mechanischer Sperrglieder im Schaltvorrichtungsgehäuse die unerwünschte oder unberechtigte Anwahl einer Fahrstufe bzw. das Starten des Motors bei eingelegter Fahrstufe verhindern.

Aus dem Stand der Technik sind hier insbesondere die unter "Keylock" und "Shiftlock" bekannten Systeme zu nennen.

Beim System "Keylock" kann nur bei Stellung des Wählhebels in der Parkstellung "P" der Motor gestartet werden. Ebenso ist beim Abstellen des Fahrzeuges ein Abziehen des Zündschlüssels nur in der genannten Parkstellung "P" möglich, so dass das Einlegen der Parksperre zwingend erforderlich und ein ungewolltes Abziehen des Zündschlüssels während der Fahrt unmöglich ist.

Beim System "Shiftlock" werden durch Blockierung des Wählhebels Fehlschaltungen vermieden, die zu einer Beschädigung des verbundenen Automatikgetriebes in Folge falscher Rahmenbedingungen für den angestrebten Gangwahlbereich wie zu hoher Drehzahlen oder falscher Geschwindigkeiten führen können. Beispiel einer derartigen Rahmenbedingung ist beispielsweise die Vorgabe, dass die Anwahl der Rückwärtsschaltstellung "R" nur dann erfolgen kann, wenn die Geschwindigkeit des Kraftfahrzeuges kleiner als 5 km/h ist.

Zur Umsetzung von "Shiftlock"- bzw. "Keylock"-Systemen sind aus dem Stand der Technik, beispielsweise der DE 199 13 005 A1, Verriegelungsvorrichtungen bekannt, bei der ein Sperrelement vorhanden ist, in dem eine zur jeweiligen Schalthebelstellung des Wählhebels zugeordnete Eingriffskontur vorhanden ist, in die ein zum Wählhebel gehörendes Bauelement eingreift. Der Einbau eines derartigen Verriegelungssystems ist zwangsläufig mit größeren Eingriffen in die Baustruktur der betroffenen Schaltvorrichtung verbunden, da die für die Sperrung der Gangwahlbereiche des Wählhebels notwendigen Konturen des Sperrelementes an die Wählhebelgeometrie angepasst werden müssen.

Weiterhin offenbart die US 5,775,166, die alle Merkmale des Oberbegriffes des Anspruchs 1 zeigt, bereits eine Schaltvorrichtung für ein Fahrzeuggetriebe mit einem innerhalb eines Schaltvorrichtungsgehäuses um mindestens eine Drehachse schwenkbaren Wählhebel zur Wahl von innerhalb des Automatikgetriebes definierten Fahrstufen. Jeder Fahrstufe ist dabei eine Schaltposition des Wählhebels zugeordnet und es ist eine Verriegelungsvorrichtung für die einzelnen Schaltpositionen des Wählhebels vorgesehen, die in Abhängigkeit von vorgegebenen Rahmendaten des Zustandes von Kraftfahrzeugkomponenten wie Pedalerie und Motor entriegelbar ist, wobei die Verriegelungsvorrichtung ein analog zu den einzelnen Schaltpositionen des Wählhebels durch diesen über eine aufwendige Kinematik verschiebbares Sperrelement aufweist. Diese Verriegelungsvorrichtung ist wenig geeignet, um in vorhandene Schaltvorrichtungen integriert zu werden.

Aufgabe der vorliegenden Erfindung ist es daher, ausgehend von den aus dem Stand der Technik bekannten gattungsgemäßen Schaltvorrichtungen derartige Konstruktionen so weiter zu entwickeln, dass die zugehörigen Verriegelungsvorrichtungen als unabhängige separate Baugruppen problemlos auch in bereits bestehende Schaltvorrichtungskonstruktionen durch geringfügige Änderungen eingebracht werden können. Darüber hinaus soll die erfindungsgemäße Schaltvorrichtung kostengünstig herstellbar sein und allen erforderlichen Ansprüchen an Lebensdauer und Zuverlässigkeit genügen.

Diese Aufgabe wird erfindungsgemäß dadurch gelöst, dass das Sperrelement als Halteplatte ausgebildet ist, welche in einer Kulissenführung zwangsverschiebbar ist, wobei die Kulissenführung aus einer im wesentlichen geradlinigen Nut und einem in der Nut angeordneten feststehenden Führungsstift besteht.

Die konstruktive Gestaltung entkoppelt die Aufgabe der Verriegelung und Entriegelung des Wählhebels von der direkten Anbindung an den Wählhebel und schafft eine eigenständige Baugruppe, die für verschiedene Schaltvorrichtungsvarianten einsetzbar und nachrüstbar ist. Einzige Verbindung zum Wählhebel besteht dabei in einer notwendigen Anbindung des verschiebbaren Sperrelementes, da dieses durch die Bewegung des Wählhebels zwangsbewegt ist. Die Verriegelungs- bzw. Entriegelungsaufgabe erfolgt getrennt von der übrigen Schaltvorrichtung durch die genannten Sperrvorrichtungen, für die unterschiedliche Ausgestaltungen denkbar sind.

Diese speziellen Ausgestaltungen sind Gegenstand von Merkmalen der auf den Anspruch 1 rückbezogenen Unteransprüche.

Beispielsweise besteht die Möglichkeit, die Sperrvorrichtungen als Kombination aus einem durch die Betätigungsvorrichtung bewegbaren Bolzen und einer Mehrzahl von jeweils mit einer zu sperrenden Gangwahlstellung korrespondierenden Ausnehmungen in dem Sperrelement zu gestalten, wobei der Bolzen in verriegeltem Zustand eine der Ausnehmungen des Sperrelementes durchsetzt.

Die Bewegung des Bolzens kann dabei durch eine Betätigungsvorrichtung erfolgen, die einen hydraulischen, elektromagnetischen, pneumatischen oder elektrischen Antrieb aufweist und mittels entsprechender Steuerungen die Verstellbewegung bereitstellt.

Alternativ dazu ist entsprechend einer weiteren vorteilhaften Ausgestaltungsvariante der Erfindung eine konstruktive Gestaltung möglich, bei der die Sperrvorrichtungen jeweils eine über die Oberfläche des Sperrelementes vorstehende Nocke aufweist, die von einem bewegbaren Bolzen mit einer darin angeordneten Ausnehmung für die Aufnahme der Nocke übergriffen wird.

Diese Ausgestaltungsvariante stellt eine andere Wirkflächenpaarung der Rastvorrichtung dar, die unter vorgegebenen Rahmenbedingungen gegebenenfalls zweckmäßig sein kann.

Im Folgenden wird ein Ausführungsbeispiel des Gegenstandes der Erfindung anhand der beigefügten Zeichnungen näher erläutert. Es zeigt:
- Figur 1: eine perspektivische Darstellung einer erfindungsgemässen Schaltvorrichtung im entriegelten Zustand des Wählhebels und
- Figur 2: eine perspektivische Darstellung der Schaltvorrichtung aus Figur 1 im verriegelten Zustand des Wählhebels.

Die in den Figuren dargestellte Schaltvorrichtung besitzt einen Wählhebel 2, der in einem Schaltvorrichtungsgehäuse 1 um eine Achse 3 verschwenkbar ist. Am unteren freien Ende des Wählhebels 2 ist dieser angebunden an ein Sperrelement 5 einer Verriegelungsvorrichtung 4. Die Verriegelungsvorrichtung 4 dient dazu, die Bewegung des Wählhebels in bestimmten Positionen, die entsprechenden Gangstufen eines Getriebes entsprechen, zu verriegeln. Eine Verriegelung ist immer dann notwendig, wenn eine Veränderung der Stellung des Wählhebels nicht mit sonstigen Rahmendaten des Zustandes von Kraftfahrzeugkomponenten, wie Pedalerie und Motordrehzahl, vereinbar ist und eine Veränderung der Wählhebelstellung und somit eine Änderung der Gangwahl zu einer Beschädigung des nachgeschalteten Getriebes oder zu einer unerwünschten Bewegung des Fahrzeuges führen würde.

Da der Wählhebel 2 mit dem im vorliegenden Ausführungsbeispiel plattenförmig ausgebildeten Sperrelement 5 über eine Kugelkopf/Zylinderkombination 13 verbunden ist, hat eine Verstellung des Wählhebels 2 zwangsläufig eine entsprechende Bewegung des Sperrelementes 5 zur Folge. Das Sperrelement 5 besitzt für jede Position des Wählhebels 2 respektive jede Gangposition des Getriebes eine Sperrvorrichtung 7, durch die das Sperrelement 5 in der entsprechenden Wählhebelstellung festgesetzt werden kann.

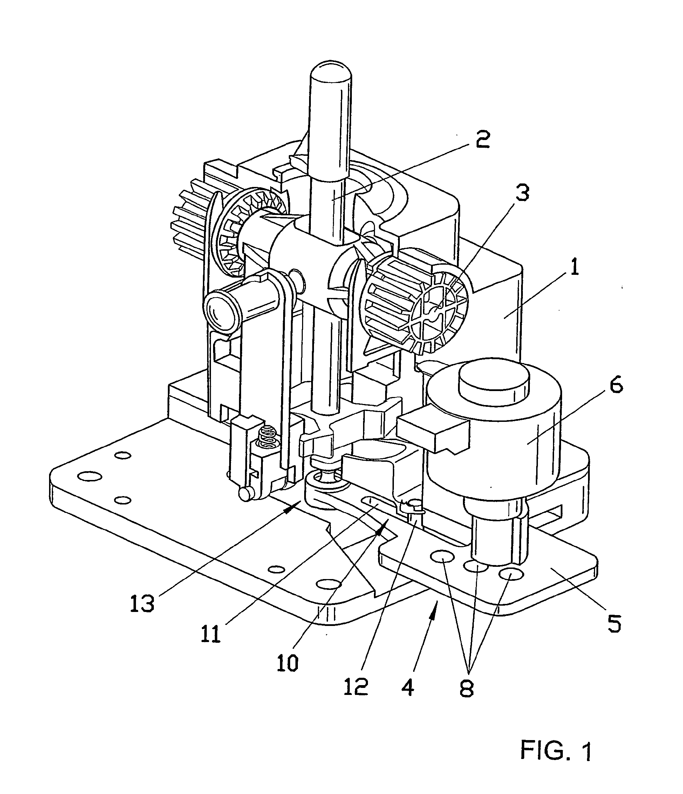

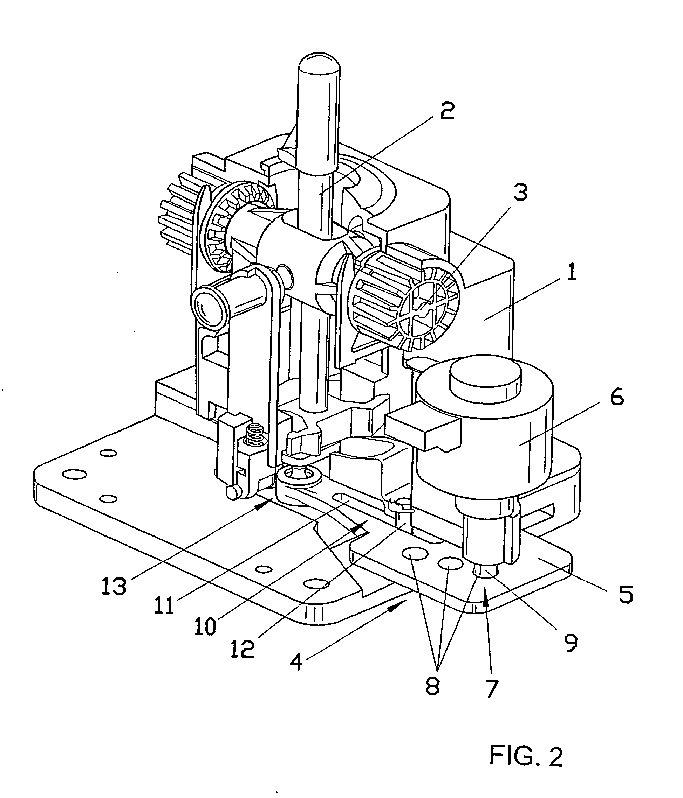

Die Sperrvorrichtung 7 besteht entsprechend dem in den Figuren 1 und 2 dargestellten Ausführungsbeispiel aus mehreren im Sperrelement 5 eingebrachten Ausnehmungen 8, die vorzugsweise kreisförmig ausgebildet sind. Oberhalb des Sperrelementes 5 befindet sich eine Betätigungseinrichtung 6, die mit einem hydraulischen, elektrischen, elektromagnetischen oder pneumatischen Antrieb versehen sein kann. Der Antrieb dient dazu, aus der Betätigungseinrichtung 6 einen zur Rastvorrichtung 7 gehörenden Bolzen 9 auszufahren und je nach Lage des Sperrelementes 5 in einer der Ausnehmungen 8 einzufahren. Ist der Bolzen 9 in eine Ausnehmung 8 eingefahren, ist das Sperrelement 5 und daraus resultierend der Wählhebel 2 in der entsprechenden Stellung blockiert. Für die Ansteuerung der Betätigungsvorrichtung und die Schaltung des Antriebes sind prinzipiell zwei Möglichkeiten denkbar.

Diese beiden Möglichkeiten werden nachfolgend beispielhaft anhand einer elektromagnetischen Antriebsausführung erläutert. Eine der Antriebsausführungen kann so ausgelegt sein, dass der Bolzen dann aus der Betätigungsvorrichtung ausgefahren wird, wenn der Antrieb strombeaufschlagt ist. Wird der Antrieb stromlos, wird der Bolzen in Folge einer geeigneten innerhalb der Betätigungsvorrichtung vorhandenen Rückstellfeder aus einer der Ausnehmungen 8 herausgezogen, so dass das Sperrelement 5 und der damit verbundene Wählhebel bewegt werden kann. Die andere Ausführungsvariante sieht vor, den Bolzen 9 bei Strombeaufschlagung des Antriebes in die Betätigungseinrichtung einzufahren und in stromlosen Zustand federkraftbedingt auszufahren. Diese Variante hätte zur Folge, dass beispielsweise bei ausgeschalteter Zündung automatisch eine Verriegelung des Wählhebels gegeben wäre.

Mittels der beschriebenen Schaltvorrichtung lassen sich auf einfache und kostengünstige Weise sowohl die oben beschriebenen "Keylock"- und "Shiftlock"-Systeme realisieren als auch eine anderweitige Verriegelung des Wählhebels in Abhängigkeit von Fahr- und Betriebszuständen des betreffenden Fahrzeuges. Hierzu kann mittels geeigneter Sensoren der Zustand der Bremse (Bremspedal getreten oder nicht getreten), der Zustand des Zündschlosses (Zündschloss gesperrt oder Zündschloss freigegeben)sowie eine Abtastung der Drehzahl am Motor oder Getriebe vorgenommen werden. Die Daten fließen einer zentralen Steuereinheit (CPU) zu, die aus den ermittelten Signalen eine Sperrung bzw. eine Freigabe des Wählhebels mittels der Betätigungseinrichtung 6 unter Zuhilfenahme der Rastvorrichtung 7 vornimmt.

### Bezugszeichenliste

- 1: Schaltvorrichtungsgehäuse
- 2: Wählhebel
- 3: Achse
- 4: Verriegelungsvorrichtung
- 5: Sperrelement
- 6: Betätigungseinrichtung
- 7: Sperrvorrichtung
- 8: Ausnehmung
- 9: Bolzen
- 10: Kulissenführung
- 11: Nut
- 12: Führungsstift
- 13: Kugelkopf/Zylinderkombination

## Patentansprüche

1. Schaltvorrichtung für ein Fahrzeuggetriebe mit einem innerhalb eines Schaltvorrichtungsgehäuses (1) um mindestens eine Drehachse (3) schwenkbaren Wählhebel (2) zur Wahl von innerhalb des Automatikgetriebes definierten Fahrstufen, wobei jeder Fahrstufe eine Schaltposition des Wählhebels zugeordnet ist, und mit einer Verriegelungsvorrichtung (4) für die einzelnen Schaltpositionen des Wählhebels (2), die in Abhängigkeit von vorgegebenen Rahmendaten des Zustandes von Kraftfahrzeugkomponenten wie Pedalerie und Motor entriegelbar ist, wobei die Verriegelungsvorrichtung (4) ein analog zu den einzelnen Schaltpositionen des Wählhebels (2) durch diesen verschiebbares Sperrelement (5) aufweist und das Sperrelement (5) eine Mehrzahl von den einzelnen Schaltpositionen entsprechenden Sperrvorrichtungen (7) aufweist, welche durch mindestens eine Betätigungseinrichtung (6) in eine Verriegelungsposition und eine Entriegelungsposition bringbar sind,
**dadurch gekennzeichnet, dass**
das Sperrelement (5) als Halteplatte ausgebildet ist, welche in einer Kulissenführung (10) zwangsverschiebbar ist, wobei die Kulissenführung (10) aus einer im wesentlichen geradlinigen Nut (11) und einem in der Nut (11) angeordneten feststehenden Führungsstift (12) besteht.

2. Schaltvorrichtung für ein Fahrzeuggetriebe nach Anspruch 1,
**dadurch gekennzeichnet, dass**
eine Sperrvorrichtung (7) als Kombination aus einem durch die Betätigungseinrichtung (6) bewegbaren Bolzen (9) und einer der jeweiligen Gangwahlstellung entsprechenden korrespondierenden Ausnehmung (8) in dem Sperrelement (5) ausgebildet ist.

3. Schaltvorrichtung für ein Fahrzeuggetriebe nach Anspruch 1 oder 2,
**dadurch gekennzeichnet, dass**
die Betätigungseinrichtung (6) einen hydraulischen Antrieb aufweist.

4. Schaltvorrichtung für ein Fahrzeuggetriebe nach einem der Ansprüche 1 oder 2,
**dadurch gekennzeichnet, dass**
die Betätigungseinrichtung (6) einen elektromagnetischen Antrieb aufweist.

5. Schaltvorrichtung für ein Fahrzeuggetriebe nach Anspruch 1 oder 2,
**dadurch gekennzeichnet, dass**
die Betätigungseinrichtung (6) einen pneumatischen Antrieb aufweist.

6. Schaltvorrichtung für ein Fahrzeuggetriebe nach Anspruch oder 2,
**dadurch gekennzeichnet, dass**
die Betätigungseinrichtung (6) einen elektrischen Antrieb aufweist.

7. Schaltvorrichtung für ein Fahrzeuggetriebe nach einem der Ansprüche 1 bis 6,
**dadurch gekennzeichnet, dass**
die Sperrvorrichtung (7) jeweils eine der jeweiligen Gangwahlstellung entsprechenden korrespondierende über die Oberfläche der Halteplatte vorstehende Nocke aufweist, die von einem durch die Betätigungseinrichtung bewegbaren Bolzen mit einer darin angeordneten Ausnehmung für die Aufnahme der jeweiligen Nocke übergriffen wird.

8. Schaltvorrichtung für ein Fahrzeuggetriebe nach einem der Ansprüche 1 bis 7,
**dadurch gekennzeichnet, dass**
der Führungsstift (12) am Schaltvorrichtungsgehäuse (1) und die Nut (11) in der Halteplatte angeordnet sind.

9. Schaltvorrichtung für ein Fahrzeuggetriebe nach einem der Ansprüche 1 bis 8,
**dadurch gekennzeichnet, dass**
die Verbindung zwischen Wählhebel (2) und Sperrelement (5) als Kugelkopf/Zylinderkombination ausgebildet ist.

## Claims

1. Gear shift device for a vehicle transmission having a selector lever (2), which is pivotable inside a gear shift device housing (1) about at least one axis of rotation (3), for selecting gears defined inside the automatic transmission, wherein with each gear a shift position of the selector lever is associated, and having a locking device (4) for the individual shift positions of the selector lever (2) that is unlockable in dependence upon defined boundary data of the state of motor vehicle components such as pedals and engine, wherein the locking device (4) comprises a blocking element (5), which is displaceable by means of the selector lever (2) analogously to the individual shift positions thereof
and the blocking element (5) comprises a plurality of blocking devices (7), which correspond to the individual shift positions and may be brought by means of at least one actuating device (6) into a locking position and an unlocking position,
**characterized in that**
the blocking element (5) takes the form of a holding plate that is positively displaceable in a link guide (10), wherein the link guide (10) comprises a substantially rectilinear groove (11) and a fixed guide pin (12) disposed in the groove (11).

2. Gear shift device for a vehicle transmission according to claim 1,
**characterized in that**
a blocking device (7) is designed as a combination of a bolt (9), which is movable by means of the actuating device (6), and a corresponding recess (8) in the blocking element (5) that corresponds to the respective gear selection position.

3. Gear shift device for a vehicle transmission according to claim 1 or 2,
**characterized in that**
the actuating device (6) comprises a hydraulic drive.

4. Gear shift device for a vehicle transmission according to one of claims 1 or 2,
**characterized in that**
the actuating device (6) comprises an electromagnetic drive.

5. Gear shift device for a vehicle transmission according to claim 1 or 2,
**characterized in that**
the actuating device (6) comprises a pneumatic drive.

6. Gear shift device for a vehicle transmission according to claim 1 or 2,
**characterized in that**
the actuating device (6) comprises an electric drive.

7. Gear shift device for a vehicle transmission according to one of claims 1 to 6,
**characterized in that**
the blocking device (7) comprises in each case a corresponding cam, which corresponds to the respective gear selection position, projects beyond the surface of the holding plate and is overlapped by a bolt, which is movable by means of the actuating device and disposed in which is a recess for receiving the respective cam.

8. Gear shift device for a vehicle transmission according to one of claims 1 to 7,
**characterized in that**
the guide pin (12) is disposed on the gear shift device housing (1) and the groove (11) is disposed in the holding plate.

9. Gear shift device for a vehicle transmission according to one of claims 1 to 8,
**characterized in that**
the connection between selector lever (2) and blocking element (5) takes the form of a ball head/cylinder combination.

## Revendications

1. Dispositif de commutation pour une transmission de véhicule avec un levier de sélection (2) pouvant pivoter à l'intérieur d'un boîtier de dispositif de changement de vitesse (1) autour d'au moins un axe de rotation (3) pour la sélection de rapports définis à l'intérieur de la transmission automatique, à chaque rapport étant associée une position de commutation du levier de sélection, et avec un dispositif de verrouillage (4) pour les différentes positions de commutation du levier de sélection (2), qui est déverrouillable en fonction de données générales prédéfinies de l'état de composants du véhicule automobile, tels que les pédales et le moteur, le dispositif de verrouillage (4) comportant un élément de blocage (5) pouvant coulisser, comme les différentes positions de commutation du levier de sélection (2), sous l'effet de celui-ci, et l'élément de blocage (5) comportant une pluralité de dispositifs de blocage (7) correspondant aux différentes positions de commutation, lesquels peuvent être amenés par au moins un dispositif d'actionnement (6) dans une position de verrouillage et une position de déverrouillage,
**caractérisé en ce que**
l'élément de blocage (5) est réalisé sous la forme d'une plaque de maintien qui peut coulisser à force dans un guide à coulisse (10), le guide à coulisse (10) étant constitué d'une rainure (11) sensiblement rectiligne et d'un doigt de guidage (12) fixe disposé dans la rainure (1).

2. Dispositif de commutation pour une transmission de véhicule selon la revendication 1,
**caractérisé en ce que**
un dispositif de blocage (7) est réalisé par combinaison d'une tige (9) déplaçable par le dispositif d'actionnement (6) et d'un évidement (8), pratiqué dans l'élément de blocage (5) et correspondant à la position de sélection de rapports respectifs.

3. Dispositif de commutation pour une transmission de véhicule selon l'une quelconque des revendications 1 ou 2,
**caractérisé en ce que**
le dispositif d'actionnement (6) comporte un entraînement hydraulique.

4. Dispositif de commutation pour une transmission de véhicule selon l'une quelconque des revendications 1 ou 2,
**caractérisé en ce que**
le dispositif d'actionnement (6) comporte un entraînement électromagnétique.

5. Dispositif de commutation pour une transmission de véhicule selon l'une quelconque des revendications 1 ou 2,
**caractérisé en ce que**
le dispositif d'actionnement (6) comporte un entraînement pneumatique.

6. Dispositif de commutation pour une transmission de véhicule selon l'une quelconque des revendications 1 ou 2,
**caractérisé en ce que**
le dispositif d'actionnement (6) comporte un entraînement électrique.

7. Dispositif de commutation pour une transmission de véhicule selon l'une quelconque des revendications 1 à 6,
**caractérisé en ce que**
le dispositif de blocage (7) comporte chaque fois une came faisant saillie de la surface de la plaque de maintien et correspondant à la position de sélection de rapports respectifs sur laquelle came passe une tige déplaçable par le dispositif d'actionnement avec un évidement, pratiqué à l'intérieur, pour recevoir la came respective.

8. Dispositif de commutation pour une transmission de véhicule selon l'une quelconque des revendications 1 à 7,
**caractérisé en ce que**
le doigt de guidage (12) est disposé sur le boîtier du dispositif de commutation (1) et la rainure (11) est disposée dans la plaque de maintien.

9. Dispositif de commutation pour une transmission de véhicule selon l'une quelconque des revendications 1 à 8,
**caractérisé en ce que**
la liaison entre le levier de sélection (2) et l'élément de blocage (5) est réalisée sous la forme d'une combinaison tête sphérique/cylindre.
